# EUROPEAN PATENT APPLICATION

(11) **EP 4 212 297 A1**
(43) Date of publication of application: **19.07.2023**
(21) Application number: 22210331.9
(22) Date of filing: 29.11.2022
(51) Int. Cl.: B27N 1/00, B27J 5/00, B27N 1/02, B27N 3/00, B27N 5/00, B65D 39/00, C08L 97/00, B27N 3/02

(54) **CORK MOLDED PRODUCT AND PRODUCTION METHOD OF THE SAME**

(30) Priority: 10.12.2021 JP 2021200880
(71) Applicant: Uchiyama Manufacturing Corp., Okayama-shi, Okayama 702-8004 (JP)
(72) Inventor: FUJIWARA, Ayumi, Okayama, 701-2221 (JP); KATAYAMA, Tatsuo, Okayama, 701-2221 (JP); YAMAMOTO, Tomohisa, Okayama, 701-2221 (JP); ANABUKI, Akihiro, Okayama, 701-2221 (JP)
(74) Representative: Stöckeler, Ferdinand

(57) **Abstract**

A cork molded product (the present cork molded product) according to an aspect of the present disclosure is obtained by mixing cork particles and a polylactic acid dispersion liquid and then compression-molding a mixture of the cork particles and the polylactic acid dispersion liquid. The present cork molded product preferably contains 100 parts by mass of the cork particles and 0.4 to 25 parts by mass of polylactic acid. In the present cork molded product, it is also preferable that the polylactic acid dispersion liquid contains an aqueous medium.

## Description

### BACKGROUND

### 1. Technical Field

An aspect of the present disclosure relates to a cork molded product and a production method of the same.

### 2. Related Art

A cork molded product obtained with cork particles and an adhesive agent has a unique texture, an excellent design feature, elasticity, and a good touch. Also, cork particles obtained by crushing, for example, scrap generated during the production of naturally occurring cork stoppers can be used as a raw material of a cork molded product. Therefore, the cork molded product is also excellent in terms of environment and cost. Accordingly, the cork molded product is widely used as a cork stopper, a sheet, a block, and others

As an adhesive agent used in such a cork molded product, an epoxy adhesive agent or a urethane adhesive agent have been used. However, as contrasted with the fact that cork particles have high biodegradability, the biodegradability of these adhesive agents is insufficient and required to be improved.

JP-A-2000-342073 describes a flowerpot obtained by pressure-molding a mixture of cork particles and a biodegradable adhesive agent. This literature also describes that as the biodegradable adhesive agent, there is used glue, starch, casein, or albumen. However, the flowerpot is low in mechanical properties and water resistance.

JP-A-2002-309096 describes a molded product obtained by injection-molding, with a mold, a composition containing cork particles and a thermoplastic polymer adhesive agent. This literature also describes that it does not matter whether the thermoplastic polymer adhesive agent is a synthetic product or a naturally occurring product. Furthermore, polylactic acid is included among examples of the naturally occurring biodegradable thermoplastic polymer adhesive agent. However, since the melting point of polylactic acid is high (160°C or higher), cork particles sometimes scorch or smell scorching when a composition containing cork particles and polylactic acid is injection-molded.

### SUMMARY

A cork molded product is obtained by mixing cork particles and a polylactic acid dispersion liquid and then compression-molding a mixture of the cork particles and the polylactic acid dispersion liquid.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

An object of the present disclosure is to provide a cork molded product that is excellent in biodegradability and can be produced at high productivity.

A cork molded product (the present cork molded product) according to an aspect of the present disclosure is obtained by mixing cork particles and a polylactic acid dispersion liquid and then compression-molding a mixture of the cork particles and the polylactic acid dispersion liquid. The present cork molded product preferably contains 100 parts by mass of the cork particles and 0.4 to 25 parts by mass of polylactic acid. In the present cork molded product, it is also preferable that the polylactic acid dispersion liquid contains an aqueous medium.

A cork stopper containing the present cork molded product, e.g. a cork stopper substantially including the present cork molded product, is a suitable embodiment.

A production method (the present production method) of the cork molded product according to an aspect of the present disclosure includes mixing the cork particles and the polylactic acid dispersion liquid and then compression-molding the mixture. The present production method preferably further includes, after the compression-molding, drying the obtained molded product at 5 to 170°C.

The present cork molded product has high biodegradability. Also, according to the present production method, the present cork molded product can be produced at high productivity.

The cork molded product according to the present embodiment is obtained by mixing cork particles and a polylactic acid dispersion liquid and then compression-molding the mixture. By using a polylactic acid dispersion liquid as an adhesive agent, a highly biodegradable cork molded product can be produced at high productivity.

Cork particles used in the cork molded product according to the present embodiment are obtained by crushing the cork tissue of the bark of cork oak, which are generally used in the production of a compressed cork stopper. The cork particles may be obtained by crushing scrap generated during the production of naturally occurring cork stoppers.

The average particle size of the cork particles is preferably 0.1 to 8 mm. The use of cork particles having such an average particle size improves the productivity of the cork molded product as well as the sealing properties and the like when the cork molded product is used as a cork stopper. When the average particle size of the cork particles is less than 0.1 mm, cork particles aggregate, which may make it difficult to uniformly mix cork particles and a polylactic acid dispersion liquid. The average particle size is more preferably 0.5 mm or more and further preferably 1 mm or more. On the other hand, when the average particle size of the cork particles exceeds 8 mm, voids are likely to occur inside the cork molded product, which may impair sealing properties. The average particle size is more preferably 5 mm or less, further preferably 3 mm or less, and particularly preferably 2 mm or less.

As an adhesive agent used in the cork molded product according to the present embodiment, a polylactic acid dispersion liquid is used. Polylactic acid has high biodegradability. On the other hand, polylactic acid has a relatively high melting point (160°C or higher). Therefore, for example, when a composition containing cork particles and polylactic acid is injection-molded, cork particles sometimes scorch or smell scorching. On the contrary, in the present embodiment, polylactic acid is used as a dispersion liquid thereby to restrain scorching of cork particles and occurrence of a scorching smell. Therefore, a cork molded product having excellent biodegradability can be produced at high productivity.

A liquid medium contained in the polylactic acid dispersion liquid is not particularly limited, as long as polylactic acid can be dispersed therein. This liquid medium is preferably, for example, an aqueous medium. The aqueous medium is preferably water or a medium containing 50% by mass or more of water. An example of an ingredient other than water is a water-soluble organic solvent (alcohols, ketones, and others) which is soluble in water at an optional ratio. The aqueous medium is preferably an aqueous medium containing 90% by mass or more of water from the environmental viewpoint, and most suitably an aqueous medium substantially including only water.

The polylactic acid contained in the polylactic acid dispersion liquid may be a homopolymer of lactic acid or a copolymer of lactic acid and other hydroxycarboxylic acid. Examples of other hydroxycarboxylic acid polymerized with lactic acid include glycolic acid, 2-hydroxybutyric acid, 2-hydroxyvaleric acid, 2-hydroxycaproic acid, 2-hydroxyheptanoic acid, 2-hydroxyoctanoic acid, 2-hydroxy-2-methylpropionic acid, 2-hydroxy-2-methylbutyric acid, 2-hydroxy-2-ethylbutyric acid, 2-hydroxy-2-methylvaleric acid, 2-hydroxy-2-ethylvaleric acid, 2-hydroxy-2-propylvaleric acid, 2-hydroxy-2-butylvaleric acid, 2-hydroxy-2-methylcaproic acid, 2-hydroxy-2-ethylcaproic acid, 2-hydroxy-2-propylcaproic acid, 2-hydroxy-2-butylcaproic acid, 2-hydroxy-2-pentylcaproic acid, 2-hydroxy-2-methylheptanoic acid, 2-hydroxy-2-ethylheptanoic acid, 2-hydroxy-2-propylheptanoic acid, 2-hydroxy-2-butylheptanoic acid, 2-hydroxy-2-methyloctanoic acid, 3-hydroxypropionic acid, 4-hydroxybutyric acid, 5-hydroxyvaleric acid, 6-hydroxycaproic acid, and 7-hydroxyheptanoic acid. The above-described lactic acid and hydroxycarboxylic acid are sometimes in the D-, L-, or D/Lform. In the present embodiment, there is no limitation on the form of the lactic acid and hydroxycarboxylic acid.

The content of the polylactic acid in the polylactic acid dispersion liquid is preferably 1 to 70% by mass. The content is more preferably 5% by mass or more, further preferably 10% by mass or more, particularly preferably 15% by mass or more, and most preferably 20% by mass or more. Also, the content is more preferably 65% by mass or less, further preferably 60% by mass or less, particularly preferably 55% by mass or less, and most preferably 50% by mass or less.

The content of the solid matter in the polylactic acid dispersion liquid is preferably 1 to 70% by mass. The content is more preferably 5% by mass or more, further preferably 10% by mass or more, particularly preferably 15% by mass or more, and most preferably 20% by mass or more. Also, the content is more preferably 65% by mass or less, further preferably 60% by mass or less, particularly preferably 55% by mass or less, and most preferably 50% by mass or less.

As long as the effect of the present embodiment is not suppressed, the polylactic acid dispersion liquid may contain other additive agents (other ingredients) other than the polylactic acid and the liquid medium. Examples of other ingredients include a plasticizer, a dispersion stabilizer, a thickener, a surface smoother, a mold release agent, a water repellent (hydrophobicity improver), a rust inhibitor, and a fluidity adjuster. The total content of other ingredients, relative to 100 parts by mass of the polylactic acid, is preferably not more than 100 parts by mass, more preferably not more than 70 parts by mass, and further preferably not more than 50 parts by mass.

The viscosity of the polylactic acid dispersion liquid is preferably 100 to 3000 mPa·s. When the viscosity is less than 100 mPa·s, the polylactic acid has the risk of dispersion failure. The viscosity is more preferably 200 mPa·s or more, further preferably 300 mPa·s or more, and particularly preferably 400 mPa·s or more. When the viscosity exceeds 3000 mPa·s, the polylactic acid has the risk of dispersion failure. The viscosity is more preferably 2500 mPa·s or less, further preferably 2000 mPa·s or less, and particularly preferably 1500 mPa·s or less.

The production method of the polylactic acid dispersion liquid is not particularly limited. For example, the polylactic acid dispersion liquid can be produced by a pressure dispersion method, a direct dispersion method, a method using an organic solvent solution, or a phase inversion method as described below. In the pressure dispersion method, the polylactic acid, the liquid medium, and other additive agents added as necessary are simultaneously charged in a sealed tank equipped with a stirrer, and pressurized while stirring under heating to disperse the polylactic acid. In the direct dispersion method, the polylactic acid and a melt containing other additive agents added as necessary are added in a liquid medium heated under normal pressure or pressurization, and stirred and dispersed. In the method using an organic solvent solution, an organic solvent solution of the polylactic acid is added in a liquid medium containing other additive agents added as necessary, and stirred and dispersed. Thereafter, the organic solvent is removed. In the phase inversion method, the polylactic acid is heated and melted, and added with a liquid medium containing other additive agents added as necessary. The mixture is stirred to disperse the polylactic acid in the liquid medium.

The average particle size of the polylactic acid dispersed in the polylactic acid dispersion liquid is preferably 0.1 to 100 µm. The average particle size is more preferably 0.5 µm or more, further preferably 1 µm or more, particularly preferably 1.5 µm or more, and most preferably 2 µm or more. Also, the average particle size is more preferably 50 µm or less, further preferably 20 µm or less, particularly preferably 15 µm or less, and most preferably 10 µm or less. The average particle size of the polylactic acid is measured by a method described in the later-described example.

Specific examples of the polylactic acid dispersion liquid include "LANDY PL-1005" and "LANDY PL-3000" manufactured by Miyoshi Oil & Fat Co., Ltd.

The cork molded product according to the present embodiment is obtained by mixing the cork particles and the polylactic acid dispersion liquid and then compression-molding the mixture. The cork molded product preferably contains 100 parts by mass of the cork particles and 0.4 to 25 parts by mass of the polylactic acid. When the content of the polylactic acid is less than 0.4 part by mass, mechanical properties of the obtained cork molded product may be insufficient. In addition, voids are likely to occur inside the cork molded product, which may impair sealing properties. The content of the polylactic acid is more preferably not less than 0.8 part by mass, further preferably not less than 1 part by mass, particularly preferably not less than 1.5 parts by mass, and most preferably not less than 2 parts by mass. On the other hand, when the content of the mixed polylactic acid exceeds 25 parts by mass, the obtained cork molded product is excessively hard. Therefore, when this cork molded product is used as a cork stopper, uncorking properties of the cork stopper may deteriorate. The content of the polylactic acid is more preferably not more than 20 parts by mass, further preferably not more than 15 parts by mass, particularly preferably not more than 10 parts by mass, and most preferably not more than 5 parts by mass.

As long as the effect of the present embodiment is not suppressed, a mixture obtained by mixing the cork particles and the polylactic acid dispersion liquid can contain other additive agents, other than the cork particles and the polylactic acid dispersion liquid. The total amount of other additive agents other than the cork particles and the polylactic acid in the obtained molded product, relative to 100 parts by mass of the cork particles, is usually not more than 10 parts by mass, preferably not more than 5 parts by mass, and more preferably not more than 1 part by mass.

The cork molded product according to the present embodiment is obtained by compression-molding the mixture. When the polylactic acid dispersion liquid is used as an adhesive agent, a cork molded product having excellent biodegradability is obtained, and furthermore, scorching of the cork particles and occurrence of a scorching smell can be restrained during molding. This enables the cork molded product to be produced at high productivity. The polylactic acid can be cured by being heated as necessary during compression-molding and/or after compression-molding.

The production method of the cork molded product according to the present embodiment is not particularly limited. The production method of the cork molded product is preferably (1) mixing the cork particles and the polylactic acid dispersion liquid and then compression-molding the mixture, and more preferably (2) mixing the cork particles and the polylactic acid dispersion liquid and then compression-molding the mixture to obtain an intermediate, and thereafter drying the intermediate. In these methods, the above-described other additive agents may be mixed together with the cork particles and the polylactic acid dispersion liquid as necessary.

A method for mixing the cork particles and the polylactic acid dispersion liquid is not particularly limited. An example of this method is mixing the cork particles, the polylactic acid dispersion liquid, and other additive agents added as necessary, using a mixer or the like.

The amount of the polylactic acid dispersion liquid mixed with the cork particles, relative to 100 parts by mass of the cork particles, is preferably 1 to 62.5 parts by mass. When the mixed amount of the polylactic acid dispersion liquid is less than 1 part by mass, mechanical properties of the obtained cork molded product may be insufficient. In addition, voids are likely to occur inside the cork molded product, which may impair sealing properties. The mixed amount of the polylactic acid dispersion liquid is more preferably not less than 2 parts by mass, further preferably not less than 2.5 parts by mass, particularly preferably not less than 3.75 parts by mass, and most preferably not less than 5 parts by mass. On the other hand, when the amount of the mixed polylactic acid dispersion liquid exceeds 62.5 parts by mass, the obtained cork molded product is excessively hard. Therefore, when this cork molded product is used as a cork stopper, uncorking properties of the cork stopper may deteriorate. The mixed amount of the polylactic acid dispersion liquid is more preferably not more than 50 parts by mass, further preferably not more than 37.5 parts by mass, particularly preferably not more than 25 parts by mass, and most preferably not more than 12.5 parts by mass.

The obtained mixture obtained by mixing the cork particles and the polylactic acid dispersion liquid is compression-molded. The compression-molding method of the mixture is not particularly limited. This method is preferably a method of charging the mixture into a cavity of a compression-molding mold and thereafter compression-molding the mixture.

The shape of the molded product obtained by compression-molding is not particularly limited and can be determined depending on its intended use. When a cork stopper as the cork molded product is produced, the obtained molded product is preferably substantially cylindrical. A method for obtaining such a substantially cylindrical molded product is preferably a method of compression-molding the mixture while compressing in a direction orthogonal to the rotation axis of a cylinder. When the mixture is compression-molded by such a method, stopper properties of the obtained cork stopper is improved. As a production method of such a molded product, a method described in JP-A-2010-99909 is adopted. The cork molded product other than a cork stopper can also be produced by a compression-molding method similar to the above-described method, except that the shape is different.

The molded product (intermediate) obtained by compression-molding is preferably dried. The drying temperature is preferably 5 to 170°C. When the drying temperature is lower than 5°C, mechanical properties of the obtained molded product may be insufficient. The intermediate is preferably dried by heating, and the heating temperature is preferably 100°C or higher and more preferably 120°C or higher. On the other hand, when the heating temperature exceeds 170°C, the obtained cork molded product may scorch or smell scorching. The heating temperature is more preferably 160°C or lower, further preferably 150°C or lower, and particularly preferably 145°C or lower. It is noted that if a molded product having sufficient mechanical properties can be obtained without heating, the intermediate may be dried by being left to stand at normal temperature.

The heating time when the intermediate is dried by heating is usually 5 to 120 minutes. When the heating time is less than 5 minutes, mechanical properties of the obtained molded product may be insufficient. The heating time is preferably 10 minutes or more. On the other hand, when the heating time exceeds 120 minutes, the obtained cork stopper may be excessively hard. The heating time is preferably 80 minutes or less, more preferably 60 minutes or less, and further preferably 40 minutes or less.

The density of the thus-obtained cork molded product is preferably 0.25 to 0.35 g/cm³. When the density of the cork molded product is in such a range, the obtained cork molded product has appropriate mechanical properties. Furthermore, when the obtained cork molded product is used as a cork stopper, sealing properties of the cork stopper is good. The density of the cork molded product is measured by a method described in the later-described example.

The cork molded product according to the present embodiment has high biodegradability. Therefore, the cork molded product is suitably used as a cork stopper, a cork sheet, a cork block, and others. Among these, a cork stopper containing the cork molded product is a suitable embodiment. The cork stopper, which has high sealing properties, can be suitably used as a stopper of beverage containers such as a wine bottle and a whiskey bottle, a food product container, a chemical product container, and others. According to the production method of the present embodiment, such a cork molded product can be produced at high productivity.

### EXAMPLES

Hereinafter, the present embodiment will be further specifically described with reference to examples.

### Example 1

A mixture was obtained by mixing 100 parts by mass of cork particles (particle size: 1 to 2 mm) and 10 parts by mass of a polylactic acid dispersion liquid ("LANDY PL-1005" manufactured by Miyoshi Oil & Fat Co., Ltd., appearance: white liquid, viscosity: 500 mPa·s, average particle size: 5 µm, solid matter concentration: 40% by mass, weak anionic). It is noted that immediately after the production, the average particle size of the polylactic acid dispersing in the polylactic acid dispersion liquid was measured by a particle size distribution measuring device (manufactured by Horiba, Ltd.: LA-910 type particle size distribution measuring device). Using a molding device described in JP-A-2010-99909 (see Figs. 2 to 6), the obtained mixture was compression-molded. The mixture was charged in a cavity (molding space) of the molding device, and thereafter compressed to obtain a cylindrical intermediate having a diameter of 25.5 mm and a length of 40 mm. The obtained intermediate was charged into a heating mold (cylindrical container) having a cavity with the same size as that of the intermediate. Thereafter, the cylindrical container was left to stand in an electric resistance-type oven at 130°C for 15 minutes. Thereafter, polishing was further performed to obtain a cylindrical cork stopper having a diameter of 23.5 mm and a length of 38 mm.

### [Density]

Using a value obtained by measuring the diameter and height of the cork stopper, the volume of the cork stopper was acquired. Then, the mass of the cork stopper was divided by the acquired volume of the cork stopper to calculate the density of the cork stopper. The calculated density was 0.27 g/cm³.

### [Evaluation of Permeability and Liquid Leakage]

Wine was charged in a wine bottle (inner diameter: 19 mm), and thereafter the wine bottle was corked with the obtained cork stopper.

The wine bottle was shifted sideways such that the wind and the cork stopper are in contact with each other, and left to stand for 6 days while stepwise increasing the temperature. The wine bottle was further left to stand for 1 day, and thereafter the cork stopper was visually observed to evaluate the permeability of wine in accordance with the following criteria. The evaluation result is illustrated in Table 1. Also, whether or not liquid leakage had occurred was checked based on the bottle masses before and after being left to stand, and it was found that liquid leakage had not occurred.
A: Wine had not penetrated cork.
B: Wine had penetrated cork.

### Comparative Example 1

A cylindrical cork stopper (diameter: 23.5 mm, length: 38 mm, density: 0.27 g/cm³) was prepared and evaluated in a similar manner to Example 1, except that 10 parts by mass of epoxy resin was used instead of the polylactic acid dispersion liquid. The evaluation result is illustrated in Table 1. Also, whether or not liquid leakage had occurred was checked based on the bottle masses before and after being left to stand, and it was found that liquid leakage had not occurred.

**[Table 1]**

| | Example 1 | Comparative Example 1 |
|---|---|---|
| Type | PLA emulsion | Epoxy |
| Permeability | A | A |

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A cork molded product obtained by mixing cork particles and a polylactic acid dispersion liquid and then compression-molding a mixture of the cork particles and the polylactic acid dispersion liquid.

2. The cork molded product according to claim 1, comprising 100 parts by mass of the cork particles and 0.4 to 25 parts by mass of polylactic acid.

3. The cork molded product according to claim 1 or 2, wherein the polylactic acid dispersion liquid contains an aqueous medium.

4. A cork stopper comprising the cork molded product according to any one of claims 1 to 3.

5. A production method of the cork molded product according to any one of claims 1 to 3, comprising mixing the cork particles and the polylactic acid dispersion liquid and then compression-molding the mixture.

6. The production method of the cork molded product according to claim 5, further comprising, after the compression-molding, drying the obtained molded product at 5 to 170°C.
